# EUROPÄISCHE PATENTSCHRIFT

(11) **EP 0 540 837 B1**
(45) Veröffentlichungstag und Bekanntmachung des Hinweises auf die Patenterteilung: **08.11.1995**
(21) Anmeldenummer: 92113908.5
(22) Anmeldetag: 14.08.1992
(51) Int. Cl.: B22C 1/22, C08L 97/02, C08L 61/26

(54) **Ligninmodifizierte Bindemittel**
Lignin modified binder
Liant modifié avec de la lignine

(30) Priorität: 07.11.1991 DE 4136594
(43) Veröffentlichungstag der Anmeldung: 12.05.1993
(73) Patentinhaber: Bakelite AG, 58642 Iserlohn-Letmathe (DE)
(72) Erfinder: Gardziella, Arno, Dr., W-5810 Witten-Rüdinghausen (DE); Hansen, Achim, Dr., W-5860 Iserlohn-Letmathe (DE); Kwasniok, Alois, W-5860 Iserlohn-Letmathe (DE)

(56) Entgegenhaltungen:
- FR-A- 1 594 091
- US-A- 5 010 156
- WPIL DATABASE, Derwent Publications Ltd., London, GB AN : 88-102389
- PATENT ABSTRACTS OF JAPAN, Japanese Patent Office, Tokyo, JP

## Beschreibung

Die Erfindung betrifft neue, emissionsarme, kalthärtende Bindemittel auf der Basis von Furanharzen und Lignin aus dem Organosolv-Verfahren zur Herstellung von härtbaren Formmassen, hochtemperaturbeständigen Formstoffen und feuerfesten Erzeugnissen, insbesondere von Gießereikernen und -formen.

Als Bindemittel für härtbare Formmassen und hochtemperaturbeständige Formstoffe zeigen Kondensationsprodukte des Furfurylalkohols eine gute thermische Beständigkeit und härten auch bei niedrigen Temperaturen relativ gut aus.

Üblicherweise beträgt der Furfurylalkoholgehalt etwa 60 bis 90 Gew.-% des verwendeten Harzes, wobei der Furfurylalkohol sowohl weitgehend monomer als auch mit Formaldehyd oder Harnstoff bzw. einem als Modifizierungsmittel zugesetzten Harnstoffharz kondensiert sein kann. Als Modifizierungsmittel sind auch Ketonharze auf der Basis von Aceton und Formaldehyd, spezielle Polyesterharze, Phenolharze und Glykole bekannt.

Neben den hohen Kosten für den verwendeten Furfurylalkohol bereitet der freie Formaldehydgehalt bzw. die Entwicklung von freiem Formaldehyd während des Aushärtens sowohl beim Einsatz von Formaldehydkondensaten als auch von nicht vorkondensierten Gemischen Probleme aufgrund der heute geltenden Umweltauflagen und MAK-Werte.

Zur Bindung des freien Formaldehyds werden daher mit Harnstoff modifizierte Furanharze auf den Markt gebracht. Jedoch an Gießformen für den Stahlguß werden besonders hohe Qualitätsanforderungen gestellt. Das Bindemittel soll für diesen Zweck möglichst stickstoffarm bzw. stickstofffrei sein, um Reaktionen mit dem Metall, bzw. Porenbildung, zu vermeiden. Die Syntheseparameter zur Herstellung solcher Harze und der daraus gewonnenen Bindemittel sind komplex und umfassen unter anderem die Verringerung des molaren Formaldehydeinsatzes, die Verlängerung der Reaktionszeiten und eine strikte Einhaltung eines engen pH-Wert-Bereiches bei der Harzsynthese, den Einsatz spezieller Katalysatoren sowie den Zusatz formaldehydbindender Additive. Dabei ist aber gleichzeitig zu beachten, daß die Verarbeitungsviskosität nicht zu stark ansteigt, die geforderte Reaktivität und die Lagerbeständigkeit des Harzes sowie der zeitliche Anstieg der Festigkeit der Kerne erhalten bleiben und vor allem auch die Wirtschaftlichkeit der Produkte nicht in Frage gestellt wird. Zur Verbilligung werden daher Furanharze mit Phenolharzen, die bei der Aushärtung nicht zur Formaldehydabspaltung neigen, gestreckt und modifiziert.

Durch den Zusatz dieser Phenolharze wird die Verarbeitbarkeit des mit Bindemittel vermischten Sandes verlängert und eine gleichmäßigere Härtung erzielt, jedoch sind in diesem Fall zur Herstellung der Formkerne bzw. Formstoffe größere Harzmengen notwendig. Dieses erschwert unter anderem die Wiederverwertung des gebrauchten Sandes.

Auch weisen die reinen Furanharze höhere Reaktivitäten bei niedrigen Temperaturen auf, und ihre Viskositäten sind weniger temperaturabhängig als die der mit einem Phenolharz modifizierten. Sie lassen sich auch bei niedrigen Temperaturen gut fördern und dosieren.

Aufgabe der Erfindung ist es daher, ein preiswertes Bindemittel zur Herstellung von härtbaren Formmassen, hochtemperaturbeständigen Formstoffen und feuerfesten Erzeugnissen zur Verfügung zu stellen, das einerseits auch bei niedrigen Temperaturen die guten Verarbeitungseigenschaften der reinen Furanharze aufweist, sich in einfacher Weise herstellen läßt und lange lagerfähig ist, das aber gleichzeitig während der Aushärtung eine möglichst geringe Formaldehydabspaltung bzw. Freisetzung aufweist und das möglichst keinen bzw. nur geringe Mengen Stickstoff enthält.

Die Lösung der Aufgabe erfolgt durch ein Bindemittel, das ein Furanharz und 5 bis 50 Gew.-% Lignin aus dem Organosolv-Verfahren, sowie organische und/oder anorganische Säuren als Härter enthält. Das im Bindemittel enthaltene Furanharz kann ein Cokondensat aus Furfurylalkohol, Formaldehyd und/oder Harnstoff sein.

Der im Bindemittel gegebenenfalls enthaltene Furfurylalkohol kann in Gegenwart von 5 bis 50 Gew.-% Lignin oder in einer Menge von 30 bis 70 Gew.-% in Gegenwart von 70 bis 30 Gew.-% Phenolformaldehydharz als freier Alkohol vorliegen oder ganz oder teilweise mit Formaldehyd und/oder Harnstoff cokondensiert sein. Als Härter können dem Bindemittel wäßrige Säuren oder Säuregemische, bestehend aus 90 bis 100 Gew.-% organischer Sulfonsäuren und
10 bis 0 Gew.-% Schwefelsäure oder aus
50 bis 100 Gew.-% organischen Sulfonsäuren und
0 bis 50 Gew.-% Phosphorsäure oder aus
50 bis 100 Gew.-% organischen Sulfonsäuren,
0 bis 10 Gew.-% Schwefelsäure und
0 bis 40 Gew.-% Phosphorsäure oder Phosphorsäure
allein zugesetzt sein, wobei die Säurekonzentration 40 bis 100 %, vorzugsweise 40 bis 70 % beträgt.

Es können aber auch Gemische bestehend aus Cu-, Fe^{III}-, Al- oder Zn-Metallsalzen organischer Sulfonsäuren oder aus einem bzw. mehrerer entsprechender Metallsalze und Schwefelsäure bzw. Phosphorsäure als Härter enthalten sein. Als organische Sulfonsäuren sind für diesen Zweck Toluolsulfonsäure, Xylolsulfonsäure, Phenolsulfonsäuren oder deren Gemische einsetzbar.

Dem furanharzhaltigen Bindemittel können sowohl Nadelholzlignin als auch Laubholzlignin hinzugefügt werden.

Geeignet sind hierzu Fraktionen mit einem mittleren Molekulargewicht von 800 bis 4000, insbesondere solche mit einem mittleren Molekulargewicht von 800 bis 1800. Die erfindungsgemäßen Bindemittel sind zur Herstellung von Formmassen geeignet. Solche Formmassen können als feuerfestes Material Quarzsand, Olivin, Chromit, Zirkonsand oder deren Gemische bzw. gegen Säuren inerte anorganische Füllstoffe enthalten und zur Herstellung von Gießereikernen und -formen und Feuerfestmassen dienen.

Durch die Suche nach einem zur Streckung von Furanharzen geeigneten Substrat, das die ursprünglichen Eigenschaften der Harze möglichst wenig beeinflußt, wurde gefunden, daß niedermolekulare Ligninfraktionen, wie sie beim Zellstoffaufschluß nach dem Organosolv-Verfahren anfallen, sowohl mit Furfurylalkohol als auch mit den üblicherweise zur Herstellung von Feuerfestmassen verwendeten kalthärtenden Furanharzen gut mischbar sind und ihnen gegenüber eine hohe Reaktivität aufweisen.

Das im Organosolv-Verfahren unter vergleichsweise milden Bedingungen schwefelfrei anfallende Lignin besitzt, da seine chemische Struktur durch das Einwirken der Prozessbedingungen nur geringfügig verändert worden ist, ein relativ niedriges mittleres Molgewicht im Gegensatz zu solchen anderer Aufschlußverfahren. Die Hauptmenge des nach dem Organosolv-Verfahren durch Auslaugen isolierten Lignins besitzt ein mittleres Molgewicht von etwa 500 bis 3 000, während nur geringe Mengen mittlere Molgewichte von 18 000 bis 20 000 und höher aufweisen. In der stark alkalischen Schwarzlauge der zweiten Auslaugungsstufe sind dagegen nur Lignine mit mittleren Molgewichten von etwa 1 000 bis 2 000 enthalten. Durch einfache technische Maßnahmen können durch das Organosolv-Verfahren auch noch Fraktionen mit niedrigerem mittlerem Molgewicht gewonnen werden.

Es wurde nun gefunden, daß üblicherweise verwendete Furanharzgemische, wie sie z. B. in EP 0 157 023 B1 beschrieben sind, mit etwa 5 bis 50 Gew.-% niedermolekularem Lignin mit einem mittleren Molekulargewicht von etwa 800 bis 4 000, wie es durch das Organosolv-Verfahren gewonnen wird, vermischt werden können, wobei die Viskosität des erhaltenen Gemischs eventuell durch Zugabe von zusätzlichem Furfurylalkohol oder einem anderen geeigneten Alkohol auf Werte zwischen 100 bis 400 mPa·s eingestellt werden kann. Besonders gut geeignet sind Ligninfraktionen mit mittleren Molgewichten von etwa 800 bis 1 800. Diese Fraktionen können in an sich bekannter Weise aus den Ligninfraktionen des Organosolv-Verfahrens abgetrennt werden oder fallen in einem 2-stufigen Prozess direkt in basischer, alkoholischer Lösung an. Diese niedermolekularen Lignine können in gelöster Form oder als getrocknetes Pulver mit einem Furanharz vermischt und unter Zusatz eines Härters bei niedrigeren Temperaturen und gegebenenfalls gemeinsam mit zusätzlichen Verarbeitungshilfen zu einem Bindemittel verarbeitet und in Formmassen eingearbeitet werden, die als feuerfestes Material gegen Säuren inerte anorganische Füllstoffe, wie z. B. Quarzsand, Olivinsand, Chromit, Zirkonsand, Bauxit, Andalusit oder deren Gemische, enthalten.

Es wurde gefunden, daß so hergestellte Lignin-Furanharzgemische in Gegenwart von geeigneten sauren Härtern, wie z. B. Phosphorsäure, Schwefelsäure oder organischen Sulfonsäuren, auch bei niedrigen Temperaturen hohe Reaktivitäten zeigen. Da die Harze bei Raumtemperatur niedrige Viskositäten aufweisen, sind sie leicht verarbeitbar und lassen sich auch bei niedrigen Temperaturen leicht fördern und dosieren.

Mit Hilfe dieser Harzgemische hergestellte Bindemittel härten im Vergleich zu herkömmlichen Furfurylalkohol-Formaldehydharzen unter stark reduzierter Formaldehydabspaltung aus. Sie sind daher nicht nur wirtschaftlicher sondern auch umweltfreundlicher, da der Formaldehydgehalt am Arbeitsplatz durch die Verwendung des nachwachsenden Rohstoffs Lignin erheblich gesenkt werden kann.

Die durch Vermischen des niedermolekularen Organosolv-Lignins mit handelsüblichen Furanharzen und durch Zugabe anderer Zusatzstoffe erhaltenen Bindemittel zeigen, in Formmassen eingearbeitet, nach dem Aushärten einen besonders guten Verbund zwischen dem ligninmodifizierten Bindemittel und den zugesetzten Füllstoffen.

So hergestellte Formteile besitzen besonders gute mechanische und thermische Eigenschaften, die denen der mit herkömmlichen, nicht mit Lignin modifizierten Furanharzen hergestellten Formteile entsprechen. Besonders gute Eigenschaften zeigen sich bei der Verwendung der erfindungsgemäßen Bindemittelgemische zur Herstellung von Feuerfestmassen, da sie feuchtigkeitsunempfindlich sind, hohe Lagerbeständigkeiten aufweisen, zu hohen Grünstandfestigkeiten und überraschenderweise zu hohen Kohlenstoffausbeuten führen.

Besonders geeignet sind diese Bindemittelgemische aufgrund ihres geringen Stickstoffgehalts zur Herstellung von Gießereikernen oder -formen für den Stahlguß.

Weitere Versuche zeigten, daß auch Furanharze, hergestellt durch Cokondensation von Furfurylalkohol und Formaldehyd in Gegenwart von Harnstoff oder durch einfache Kondensation von Furfurylalkohol und Harnstoffharz, mit niedermolekularem Lignin aus dem Organosolv-Verfahren in einfacher Weise mischbar sind und zur Herstellung von Bindemitteln für Feuerfestmassen und ähnlichen geformten Produkten verwendet werden können. Solche Harzgemische mit einem Stickstoffgehalt von bis zu 6 Gew.-% können unter anderem zur Herstellung von Gießereikernen für den Eisenguß verwendet werden.

Als weiteren Harzbestandteil können solche Bindemittel niedrigviskose Phenolharze enthalten, wobei das Gewichtsverhältnis des zur Viskositätseinstellung hinzugefügten Furfurylalkohols und des Phenolformaldehydharzes zwischen 30 : 70 und 70 : 30 liegen sollte. Als Phenolharze sind für diesen Zweck alle im sauren Medium hergestellten Kondensationsprodukte auf der Basis von Phenolen, Kresolen und Bisphenolen mit Formaldehyd in einem molaren Verhältnis von Phenol zu Formaldehyd von 1 : 0,8 bis 1 : 0,2 einsetzbar. Bekannt sind solche Harze z. B. aus EP 248 980 A1.

Als Härter können dem aus den oben beschriebenen Harzgemischen hergestellten Bindemittel 4 bis 6 Gew.-% einer Säure hinzugefügt werden. Geeignete Säuren sind Schwefelsäure, Phophorsäure, organische Sulfonsäuren, Phenolsulfonsäure aber auch deren Metallsalze, insbesondere deren Cu-, Fe^{III}- oder Al-salze.

Einsetzbar sind aber auch Gemische der genannten Säuren, sowie alle Substanzen, die unter Bildung starker Säuren hydrolysieren, wie z. B. Benzolsulfonylchlorid.

Vorzugsweise werden Säuregemische bestehend aus 90 bis 100 Gew.-% einer organischen Sulfonsäure und 10 bis 0 Gew.-% Schwefelsäure oder 50 bis 100 Gew.-% einer organischen Sulfonsäure und 50 bis 0 Gew.-% Phosphorsäure eingesetzt.

Geeignet sind aber auch Härtergemische, die zu 50 bis 100 Gew.-% aus einer organischen Sulfonsäure, 0 bis 10 Gew.-% Schwefelsäure und 0 bis 40 Gew.-% Phosphorsäure bestehen, wobei dem Härtergemisch die organischen Sulfonsäuren als Cu-, Fe^{III}- oder Al-Salze zugesetzt werden oder als Polyoladdukte, wie sie aus EP 139 309 B1 bekannt sind.

Die im folgenden gegebenen Beispiele dienen zur weiteren Erläuterung der Erfindung, sollen sie jedoch nicht auf diese beschränken:

### Beispiel 1

Ein Furanharz wird hergestellt, indem man 67 % Furfurylalkohol, 14 % eines handelsüblichen wässrigen Harnstoffharzes (Urecoll 135 der Firma BASF Ludwigshafen), 14 % Organosolv-Lignin (Fichtenlignin), 30 %ig gelöst in einem Teil des eingesetzten Furfuryalkoholes, 0,3 % Dynasilan 1506 (Handelsprodukt der Hüls AG) und 4 % Lösungsmittelgemisch (aus Ethanol und Diglykol im Verhältnis 1 : 1) homogen miteinander vermischt.

Das eingesetzte Organosolv-Lignin hat einen Sinterpunkt von 110° C und ein mittleres Molgewicht von ca. 1.200.

### Beispiel 2

Herstellung von Furanharz gemäß Beispiel 1 unter Verwendung von fraktionierten Organosolv-Lignin (Laubholzlignin) mit einem Schmelzpunkt nach DIN ISO 10082 von 85 bis 90° C und einem mittleren Molekulargewicht von 800.

### Beispiel 3

4 kg Quarzsand (H 32 der Haltener Quarzwerke) werden in einem Labor-Flügelmischer mit 16 g wässrigem Härter H 982 (Handelsprodukt Bakelite GmbH - Iserlohn-Letmathe; enthält 65 % p-Toloulsulfonsäure und 0,4 % Schwefelsäure) benetzt und anschließend mit 40 g erfindungsgemäßem Harz aus Beispiel 1 umhüllt.

Aus dem Formsand werden Prüfstäbe mit den Abmessungen 165 x 22,5 x 22,5 mm hergestellt. Die Kaltbiegefestigkeit nach 2, 3 und 24 Stunden geprüft.

Mit dem Formsand wird außerdem eine Kastenform von 350 x 100 x 100 mm befüllt und das Entformungsverhalten ("Entformen", ein Maß für die Aushärtung in Abhängigkeit von der Zeit). Die ermittelten Daten sind in Tabelle 2 enthalten.

Mit der Formsandmischung hergestellte Gußformen zeigten beim Abguß mit Gußeisen bei ca. 1 400 °C ein normales Verhalten. Die Gußteile zeichneten sich durch gute, fehlerfreie Oberflächen aus.

### Beispiel 4

4 kg Quarzsand (H 32 der Haltener Quarzwerke) werden in einem Laborflügelmischer mit 16 g wässrigem Härter H 982 (Handelsprodukt Bakelite GmbH - Iserlohn Letmathe; enthält 65 % p-Toloulsulfonsäure und 0,4 % Schwefelsäure) benetzt und anschließend mit 40 g erfindungsgemäßem Harz aus Beispiel 2 umhüllt.

Aus dem Formsand werden Prüfstäbe mit den Abmessungen 165 x 22,5 x 22,5 mm hergestellt. Die Kaltbiegefestigkeit nach 2, 3 und 24 Stunden geprüft.

Mit dem Formsand wird außerdem eine Kastenform von 350 x 100 x 100 mm befüllt und das Entformungsverhalten ("Entformen", ein Maß für die Aushärtung in Abhängigkeit von der Zeit). Die ermittelten Daten sind in Tablele 2 enthalten.

Mit der Formsandmischung hergestellte Gußformen zeigten beim Abguß mit Gußeisen bei ca. 1 400 °C ein normales Verhalten. Die Gußteile zeichneten sich durch gute, fehlerfreie Oberflächen aus.

### Vergleichsbeispiel 1

Herstellung eines Furanharzes wie die erfindungsgemäßen Beispiele 1 und 2 aber Austausch von 14 % Lignin gegen 14 % eines Ketonharzes auf Basis Aceton-Formaldehyd (alkalisch kondensiert im Verhältnis 1 : 1,05). Die Kenndaten sind der Tabelle 1 zu entnehmen.

### Vergleichsbeispiel 2:

Formstoffherstellung wie in den erfindungsgemäßen Beispielen 3 und 4, aber unter Verwendung von nicht-erfindungsgemäßem Furanharz aus Vergleichsbeispiel 1.

Die Formstoffdaten sind der Tabelle 2 zu entnehmen.

**Tabelle 1**

| (Furanharze) | | | |
|---|---|---|---|
| | Furanharz Beispiel 1 | Furanharz Beispiel 2 | Furanharz Vergl.- Beispiel 1 |
| Feststoffgehalt 87-88 nach VDG P 70 % | 87-88 | 87-88 | 85-87 |
| Viskosität nach DIN 53015 mPa.s | 20-30 | 15-26 | 16-24 |
| Furfurylalkoholgehalt % | 67 | 67,5 | 65-67 |
| Freier Formaldehydgehalt % | 0,1 | 0,15 | 0,55 |

**Tabelle 2**

| (Formstoffe) | | | |
|---|---|---|---|
| | Beispiel 3 | Beispiel 4 | Vergleichsbeispiel 2 |
| KBF-2 h N/mm² | 300 | 280 | 130 |
| KBF-3 h N/mm² | 340 | 390 | 290 |
| KBF-24 h N/mm² | 400 | 440 | 430 |
| Formtest (2 h) | gut formbar kein Abrieb | entformbar etwas Abrieb | gut entformbar starker Abrieb |

### Beispiel 5

9.400 g einer Mischung aus Bauxit verschiedenster Körnung wird mit 50 g einer 65 %igen p-Toluolsulfonsäure (enthält maximal 0,4 % Schwefelsäure) benetzt und mit 500 g einer Lösung aus 30 % fraktioniertem Organosolv-Lignin (Fichtenlignin, mittleres Molgewicht 900, Schmelzpunkt ca. 90° C), 10 % eines 70 %igen wässrigen Phenolresols (Phenol-Formaldehyd-Verhältnis 1 : 1,1) und 60 % Furfurylalkohol homogen vermischt.

Die Mischung wird unmittelbar danach zu Formkörpern verpreßt. Die Formkörper werden 24 Stunden gelagert, wobei sie aushärten. Die Kaltdruckfestigkeit liegt bei ca. 85 N/mm².

Die Formkörper sind transportfähig und können in Stahlwerksaggregate eingebaut werden.

Separate Versuche ergaben, daß nach gesteuerter Temperung auf 1000° C die Formkörper einen Kohlenstoffgehalt von ca. 52 % bezogen auf die ursprünglichen Bindemittelanteile aufwiesen.

## Patentansprüche

1. Bindemittel zur Herstellung von Formstoffen aus feuerfestem Material, **dadurch gekennzeichnet**, daß es ein Furanharz und 5 bis 50 Gew.-% niedermolekulares Lignin aus dem Organosolv-Verfahren mit einem durchschnittlichen Molekulargewicht von 800 bis 4000, insbesondere 800 bis 1800; sowie organische und/oder anorganische Säuren als Härter enthält.

2. Bindemittel gemäß Anspruch 1**, dadurch gekennzeichnet**, daß das Furanharz ein Cokondensationsharz aus Furfurylalkohol, Formaldehyd und/oder Harnstoff ist.

3. Bindemittel gemäß den Ansprüchen 1 bis 2 zur Herstellung von Formstoffen aus feuerfestem Material, **dadurch gekennzeichnet**, daß es monomeren Furfurylalkohol enthält.

4. Bindemittel gemäß den Ansprüchen 1 bis 3, **dadurch gekennzeichnet**, daß das Furanharz mit einem Phenolformaldehydharz im Gewichtsverhältnis 30 : 70 bis 70 : 30 vermischt ist.

5. Bindemittel gemäß den Ansprüchen 3 und 4, **dadurch gekennzeichnet**, daß der Furfurylalkohol ganz oder teilweise mit Harnstoff und/oder Formaldehyd cokondensiert ist.

6. Bindemittel gemäß den Ansprüchen 1 bis 5, **dadurch gekennzeichnet**, daß es als Härter ein Gemisch aus 90 bis 100 Gew.-% organischen Sulfonsäuren und 10 bis 0 Gew.-% Schwefelsäure enthält.

7. Bindemittel gemäß den Ansprüchen 1 bis 5, **dadurch gekennzeichnet**, daß es als Härter ein Gemisch aus 50 bis 100 Gew.-% organischen Sulfonsäuren und 0 bis 50 Gew.-% Phosphorsäure enthält.

8. Bindemittel gemäß den Ansprüchen 1 bis 5, **dadurch gekennzeichnet**, daß es als Härter ein Gemisch aus 50 bis 100 Gew.-% organischen Sulfonsäure, 0 bis 10 Gew.-% Schwefelsäure und 0 bis 40 Gew.-% Phosphorsäure enthält.

9. Bindemittel gemäß den Ansprüchen 1 bis 5, **dadurch gekennzeichnet**, daß als Härter Gemische, bestehend aus Metallsalzen organischer Sulfonsäuren oder dieser Metallsalze und Schwefelsäure bzw. aus diesen Metallsalzen und Phosphorsäure, eingesetzt werden.

10. Bindemittel gemäß den Ansprüchen 1 bis 9, **dadurch gekennzeichnet**, daß es als organische Sulfonsäure Toluolsulfonsäure, Xylolsulfonsäure, Phenolsulfonsäure oder deren Gemische enthält.

11. Bindemittel gemäß den Ansprüchen 1 bis 5, **dadurch gekennzeichnet**, daß als Härter Phosphorsäure verwendet wird.

12. Bindemittel gemäß den Ansprüchen 1 bis 11, **dadurch gekennzeichnet**, daß das entsprechende Lignin aus einem Nadelholz isoliert worden ist.

13. Bindemittel gemäß den Ansprüchen 1 bis 11, **dadurch gekennzeichnet**, daß das entsprechende Lignin aus einem Laubholz isoliert worden ist.

14. Formmassen, hergestellt unter Verwendung eines Bindemittels gemäß den Ansprüchen 1 bis 13.

15. Formmassen gemäß Anspruch 14, **dadurch gekennzeichnet**, daß sie als feuerfestes Material Quarzsand, Olivinsand, Chromitsand, Zirkonsand, Bauxit, Andalusit oder deren Gemische enthalten.

16. Formmassen gemäß den Ansprüchen 14 und 15, **dadurch gekennzeichnet**, daß sie als feuerfestes Material gegen Säure inerte anorganische Füllstoffe enthalten.

17. Formmassen gemäß den Ansprüchen 14 bis 16 zur Herstellung von Gießereikernen und -formen.

18. Formmassen gemäß den Ansprüchen 14 bis 16 zur Herstellung von Feuerfestmassen.

## Claims

1. A binder for manufacturing mouldings from fireproof material, characterised in that it contains a furan resin and 5 to 50 wt.% low-molecular lignin from the organosolv process with an average molecular weight of 800 to 4000, in particular 800 to 1800, and organic and/or inorganic acids as hardeners.

2. A binder according to claim 1, characterised in that the furan resin is a co-condensation resin from furfuryl alcohol, formaldehyde and/or urea.

3. A binder according to claims 1 to 2 for manufacturing mouldings from fireproof material, characterised in that it contains monomeric furfuryl alcohol.

4. A binder according to claims 1 to 3, characterised in that the furan resin is mixed with a phenol-formaldehyde resin in a weight ratio of 30 : 70 to 70 : 30.

5. A binder according to claims 3 and 4, characterised in that the furfuryl alcohol is completely or partly co-condensed with urea and/or formaldehyde.

6. A binder according to claims 1 to 5, characterised in that it contains a mixture of 90 to 100 wt.% organic sulphonic acids and 10 to 0 wt.% sulphuric acid as a hardener.

7. A binder according to claims 1 to 5, characterised in that it contains a mixture of 50 to 100 wt.% organic sulphonic acids and 0 to 50 wt.% phosphoric acid as a hardener.

8. A binder according to claims 1 to 5, characterised in that it contains a mixture of 50 to 100 wt.% organic sulphonic acid, 0 to 10 wt.% sulphuric acid and 0 to 40 wt.% phosphoric acid as a hardener.

9. A binder according to claims 1 to 5, characterised in that mixtures of metal salts of organic sulphonic acids or these metal salts and sulphuric acid or these metal salts and phosphoric acid are used as hardeners.

10. A binder according to claims 1 to 9, characterised in that it contains toluenesulphonic acid, xylenesulphonic acid, phenolsulphonic acid or mixtures thereof as organic sulphonic acid.

11. A binder according to claims 1 to 5, characterised in that phosphoric acid is used as a hardener.

12. A binder according to claims 1 to 11, characterised in that the appropriate lignin was isolated from a softwood.

13. A binder according to claims 1 to 11, characterised in that the appropriate lignin was isolated from a hardwood.

14. Moulding materials, manufactured using a binder according to claims 1 to 13.

15. Moulding materials according to claim 14, characterised in that they contain quartz sand, olivine sand, chromite sand, zircon sand, bauxite, andalusite or mixtures thereof as a fireproof material.

16. Moulding materials according to claims 14 and 15, characterised in that they contain inorganic fillers, inactive to acid, as a fireproof material.

17. Moulding materials according to claims 14 to 16 for manufacturing casting cores and moulds.

18. Moulding materials according to claims 14 to 16 for manufacturing refractory materials.

## Revendications

1. Liant pour la préparation de matières moulées à partir d'un matériau réfractaire, caractérisé en ce qu'il contient une résine furannique et 5 à 50% en poids de lignine de bas poids moléculaire issue du procédé Organosolv ayant un poids moléculaire moyen de 800 à 4 000, en particulier de 800 à 1 800, ainsi que des acides organiques et/ou inorganiques en tant que durcisseurs.

2. Liant selon la revendication 1, caractérisé en ce que la résine furannique est une résine obtenue par cocondensation d'alcool furfurylique, de formaldéhyde et/ou d'urée.

3. Liant selon les revendications 1 à 2 pour la préparation de matières moulées à partir d'un matériau réfractaire, caractérisé en ce qu'il contient de l'alcool furfurylique monomère.

4. Liant selon les revendications 1 à 3, caractérisé en ce que la résine furannique est mélangée avec une résine phénol-formaldéhyde dans le rapport pondéral de 30:70 à 70:30.

5. Liant selon les revendications 3 et 4, caractérisé en ce que l'alcool furfurylique est cocondensé en totalité ou en partie avec de l'urée et/ou du formaldéhyde.

6. Liant selon les revendications 1 à 5, caractérisé en ce qu'il contient comme durcisseur un mélange de 90 à 100% en poids d'acides sulfoniques organiques et de 10 à 0% en poids d'acide sulfurique.

7. Liant selon les revendications 1 à 5, caractérisé en ce qu'il contient comme durcisseur un mélange de 50 à 100% en poids d'acides sulfoniques organiques et de 0 à 50% en poids d'acide phosphorique.

8. Liant selon les revendications 1 à 5, caractérisé en ce qu'il contient comme durcisseur un mélange de 50 à 100% en poids d'acides sulfoniques organiques, de 0 à 10% en poids d'acide sulfurique et de 0 à 40% en poids d'acide phosphorique.

9. Liant selon les revendications 1 à 5, caractérisé en ce qu'on met en oeuvre en tant que durcisseurs des mélanges constitués par des sels métalliques d'acides sulfoniques organiques ou par ces sels métalliques et de l'acide sulfurique, respectivement par ces sels métalliques et de l'acide phosphorique.

10. Liant selon les revendications 1 à 9, caractérisé en ce qu'il contient en tant qu'acide sulfonique organique de l'acide toluènesulfonique, de l'acide xylènesulfonique, de l'acide phénolsulfonique ou leurs mélanges.

11. Liant selon les revendications 1 à 5, caractérisé en ce que l'acide phosphorique est utilisé comme durcisseur.

12. Liant selon les revendications 1 à 11, caractérisé en ce que la lignine correspondante a été isolée à partir d'un bois de conifères.

13. Liant selon les revendications 1 à 11, caractérisé en ce que la lignine correspondante a été isolée à partir d'un bois feuillu.

14. Matières à mouler, préparées par emploi d'un liant selon les revendications 1 à 13.

15. Matières à mouler selon la revendication 14, caractérisées en ce qu'elles contiennent comme matériau réfractaire du sable quartzeux, du sable d'olivine, du sable de chromite, du sable de zircone, de la bauxite, de l'andalusite ou leurs mélanges.

16. Matières à mouler selon les revendications 14 et 15, caractérisées en ce qu'elles contiennent comme matériau réfractaire des matières de charge inorganiques inertes vis à vis des acides.

17. Matières à mouler selon les revendications 14 à 16 pour la confection de noyaux et de moules de fonderie.

18. Matières à mouler selon les revendications 14 à 16 pour la fabrication de produits réfractaires.
